# EUROPEAN PATENT SPECIFICATION

(11) **EP 0 964 825 B1**
(45) Date of publication and mention of the grant of the patent: **30.10.2002**
(21) Application number: 98908385.2
(22) Date of filing: 27.02.1998
(51) Int. Cl.: G06F 17/60

(54) **METHOD AND APPARATUS FOR HANDLING NEWSPAPERS AND MAGAZINES**
VERFAHREN UND VORRICHTUNG ZUR HANDHABUNG VON ZEITUNGEN UND ZEITSCHRIFTEN
PROCEDE ET APPAREILS DE MANIPULATION DE JOURNAUX ET DE MAGAZINES

(30) Priority: 07.03.1997 SE 9700820
(43) Date of publication of application: 22.12.1999
(73) Proprietor: RVH Mediaexpo AB, 162 06 Vällingby (SE)
(72) Inventor: HAMMARBERG, Rolf, S-162 45 Vällingby (SE)
(74) Representative: Sundström, Per Olof
(86) International application number: SE9800359
(87) International publication number: WO98039232

(56) References cited:
- AT-B- 305 897
- JP-A- 7 068 854
- US-A- 5 337 253
- US-A- 5 354 098

## Description

The present invention relates to a method according to the preamble of the attached method Claim for handling commission-sale newspapers and magazines that have not been sold at a retail establishment. The invention also relates to apparatus for carrying out the method, in accordance with the preamble of the apparatus Claim.

US-A-5354098 reveals a method and a system for handling unsold commission sales newspapers and magazines at a newspaper retail establishment, of the kind defined in the preamble of appended claims 1 and 6 respectively. A reader is arranged to read a readable code on each newspaper or magazine, the code including information relating to at least the identity of said newspaper or magazine. The information read in by the reader is sent to a remote location at which the newspapers are accounted for. In US-A-5354098, each newspaper or magazine must be provided with a cover strip which covers the code and which is torn off in order to expose the code so that it can be read by the reader.

Substantially, all newspapers and magazines that are sold in newspaper agents, tobacco shops, petrol stations, grocery stores, departmental stores, large marketplaces, etc., are sold on a commission basis. The suppliers/companies concerned supply a distributor with the newspapers and magazines in question, and the distributor, in turn, delivers these various newspapers and magazines to retail agents (newspaper stands, tobacco shops, and so on). The distributor also collects those newspapers and magazines that have not been sold. Naturally, the retailers must be recompensed for those newspapers and magazines that are returned unsold to the distributor, in accordance with the commission agreement. These unsold newspapers and magazines are collected at regular intervals, which may vary from between a week to a month. Consequently, newspaper retailers have always had a negative attitude to the return of unsold newspapers, because of the time it takes (about 0.5 h. per day), therewith constituting an expense on the part of the retailer. Over 12,000 newspaper retailers are found in Sweden alone (of which about 4,600 are grocery stores).

Those newspapers and magazines that are unsold and are to be returned must normally be sorted and bundled together before the distributor is able to pick them up and transport them back to a collecting establishment at which the returned newspapers and magazines are checked and credited to the retailer, and thereafter transported to wastepaper depots and paper mills for recycling purposes.

Accordingly, an object of the present invention is to provide a technique which will considerably simplify the handling of returned newspapers and magazines at the various retail establishments, so as partly to limit the cost of transporting unsold newspapers, etc., and partly to provide a safer check of returned newspapers and magazines that are to be credited to respective retailers, and partly to provide quickly information relating to newspapers and magazines returned from the retail establishments to the suppliers/companies.

This object is achieved with the inventive method defined in the following independent method Claim. The object is also achieved with apparatus according to the following independent apparatus Claim.

Further embodiments of the invention will be apparent from the following dependent Claims.

The invention is based fundamentally on allocating to newspapers and magazines, etc., that are retailed on a commission basis a code that contains information relating to at least the name and publication number of the newspaper, magazines and the like. Furthermore, an apparatus that contains a newspaper defacing device, which may be of a known kind, is placed at the retail establishment. Unsold newspapers, etc., i.e. returned newspapers, can then be fed into the defacing device. The code allotted to the newspaper can then be read with the aid of an appropriate reader, in conjunction with defacing the newspaper. By ensuring (for instance with the aid of guide means, conveyors and outer apparatus-encapsulating means) that the code carried by a newspaper can only be read in conjunction with the actual defacement of the newspaper, the information read by the reader will constitute a confirmation that the newspaper identified by the reader has actually been defaced. Subsequent to registration, the information read by the reader can be sent, e.g. over the telephone network, to an accounting centre, for instance located with the distributor, from which information can be forwarded to the publishing company concerned. The cancelled/destroyed newspapers, magazines, etc., can be transported to a general wastepaper collection depot and there collected for recycling purposes. It will be seen from this that the publishers are quickly informed of the status of newspaper sales, and there is no longer any reason for a retailer to wait to return unsold newspapers, since a retailer is able to deface or destroy a newspaper when he/she considers the newspaper to be "old", therewith enabling the retailer to be able to use the space that would otherwise have been occupied by the newspaper concerned.

The invention does not, in principle, require newspapers, magazines, etc., to be allocated new code information, since the EAN-code conventionally allocated to newspapers contains sufficient information.

The newspaper defacing device will conveniently include means for destroying that part of the newspaper that carries the code concerned. The code reader of the defacing device will suitably be constructed so that it can only read a code when the cancelling device is active. Ideally, the reader is connected to a modem, possibly via a memory, that can be coupled, e.g. via the telephone network, to a corresponding modem with associated office computer located with the distributor, from which information relating to a given publishing company is sent solely to this company, for instance via a computer network to a computer of respective companies, where the actual sales of the company's newspapers, magazines, etc., can be quickly evaluated.

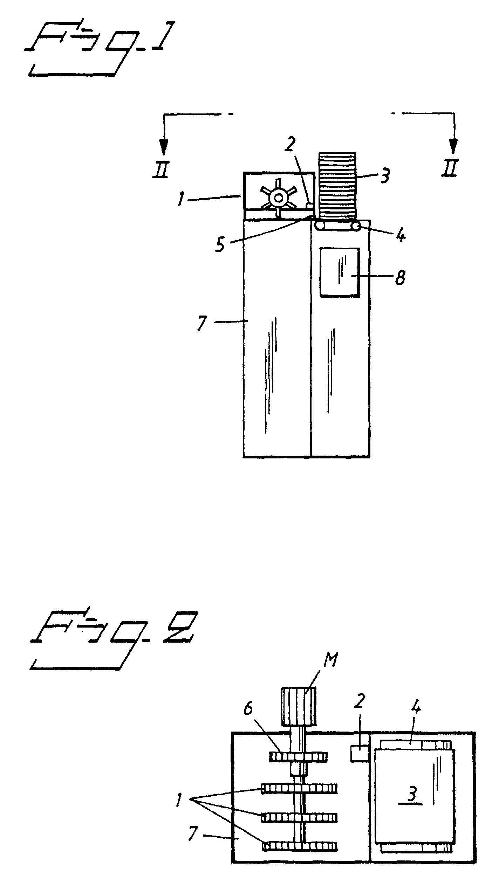

In the accompanying drawings, Fig. 1 illustrates schematically an exemplifying embodiment of an apparatus for carrying out the inventive method; and Fig. 2 is a schematic view taken on the line II-II in Fig. 1.

The inventive apparatus shown in Fig. 1 includes a newspaper defacing device 1 in the form of one or more cutters driven by a motor M. The apparatus also includes a newspaper-code reader 2 positioned in the path travelled by the newspapers into and through the defacing device 1. Also included is a store 3 for stacks of newspapers that shall be defaced piece-wise, said stack resting on a conveyor 4 which feeds the bottom-most newspaper and each subsequent bottom-most newspaper through an outfeed slot 5 in the stack store 3. A newspaper that is positioned correctly in the stack will be fed-out into engagement with the cutters of the defacing means 1 before the newspaper code can be read by the reader 2. The defacing device may also include a destruction device 6, for instance in the form of a cutting blade, that lies in the movement path of the newspaper code, so that the code will be destroyed as the newspaper passes the defacing device and after the code has been read.

The apparatus also includes a bin for collecting defaced newspapers. The reader is connected to a modem 8 which, in turn, may be connected on-line with an office computer located in the distributor's office, therewith immediately informing each publishing company of the newspapers that have been defaced or destroyed and the title of the newspaper. This information may conveniently also be sent to the distributor, so that he/she is able to credit the defaced newspapers to respective retailers.

The apparatus may, of course, be supplemented and modified in a conventional way. For instance, the information deriving from the reader 2 may be stored in a memory and transferred therefrom to concerned parties in the event of queries, or at certain times, in some known way.

## Claims

1. A method of handling unsold commission-sales newspapers and magazines at a newspaper retail establishment, comprising causing a reader (2) to read a readable code on each newspaper or magazine, wherein the code includes information relating to at least the identity and the number of said each newspaper; and sending (8) the information read-in by the reader to a remote location at which newspapers are accounted for **characterized by** causing a newspaper defacing device (1, 6) placed at the retail establishment to deface or destroy the newspaper in conjunction with reading the newspaper code.

2. A method according to Claim 1, **characterised in that** the reader is connected on-line to an office computer belonging to the distributor, via a modem (8), wherein the publishing company that has issued the newspaper is able to take information relating to the defacement, or cancellation, of the newspaper from the office computer.

3. A method according to Claim 1 or 2, **characterised in that** the defaced newspapers are placed in a wastepaper collection depot. normally used by the retailer.

4. A method according to any one of Claims 1-3, **characterised in that** the newspaper defacing device (1, 6) is adapted to destroy the code on the newspaper subsequent to having read said code.

5. A method according to any one of Claims 1-4, **characterised in that** the newspaper defacing device is adapted to begin defacing a newspaper before its code can be read by the reader (2).

6. Apparatus for handling unsold commission-sales newspapers at a retail establishment, comprising a reader (2) which is adapted to read a readable code on each newspaper, wherein said code includes information relating at least to the identity and the publication number of the newspaper; and means (8) for sending the information read by said reader to an accounting centre **characterized in that** the apparatus includes a newspaper defacing or destroying device (1, 6) which is adapted to deface or destroy a newspaper in conjunction with reading the code on said newspaper by said reader (2).

7. Apparatus according to Claim 6, **characterised in that** the reader (2) is preferably connected on-line, via a modem (8), to an office computer belonging to the newspaper distributor, from which respective publishing companies are able to collect information relating to defaced or cancelled newspapers.

8. Apparatus according to Claim 6 or 7, **characterised in that** the defacing device (1, 6) includes means (6) for destroying the code on the newspaper subsequent to reading said code.

9. Apparatus according to any one of Claims 6-8, **characterised in that** the newspaper defacing device (1, 6) is adapted to commence defacement of a newspaper before its code can be read by the reader.

## Patentansprüche

1. Verfahren zur Handhabung unverkaufter auf Kommission erworbener Zeitungen und Zeitschriften bei einer Zeitschriftenverkaufsstelle mit den Verfahrensschritten: Veranlassen eines Lesevorrichtung (2) zum Lesen eines lesbaren Codes auf jeder Zeitung oder Zeitschrift, wobei der Code Informationen umfasst, welche sich zumindest auf die Identität und die Nummer der Zeitung beziehen und Versenden (8) der durch die Lesevorrichtung erfassten Information an eine abgelegene Stelle, bei welcher für die Zeitungen Rechenschaft abgelegt wird, **gekennzeichnet durch** Veranlassen einer Zeitschriftenentwertungsvorrichtung (1,6) bei der Zeitschriftenverkaufsstelle die Zeitschrift zu entwerten oder zu zerstören in Verbindung mit dem Lesen des Zeitungscodes.

2. Verfahren gemäß Anspruch 1, **dadurch gekennzeichnet dass** die Lesevorrichtung on-line mit einem Officecomputer des Distributors mittels eines Modems (8) verbunden ist, wobei die verlegende Firma, die die Zeitung herausgebracht hat, die Informationen bezüglich der Entwertung oder Löschung der Zeitung von dem Officecomputer ablesen kann.

3. Verfahren gemäß Anspruch 1 oder 2, **dadurch gekennzeichnet, dass** die entwerteten Zeitungen in ein Altpapiersammeldepot platziert werden, das normalerweise von dem Verkäufer verwendet wird.

4. Verfahren gemäß einer der Ansprüche 1 bis 3, **dadurch gekennzeichnet, dass** die Zeitschriftenentwertungsvorrichtung (1,6) ausgebildet ist, den Code nach der Erfassung zu zerstören.

5. Verfahren gemäß einer der Ansprüche 1 bis 4, **dadurch gekennzeichnet, dass** die Zeitschriftentwertungsvorrichtung ausgebildet ist, die Zeitung zu entwerten bevor der Code von der Lesevorrichtung (2) gelesen werden kann.

6. Vorrichtung zur Handhabung unverkaufter, auf Kommissionsbasis verkaufter Zeitungen bei einer Verkaufsstelle, die versehen ist mit einer Lesevorrichtung (2), der ausgebildet ist zum Lesen eines lesbaren Codes auf jeder Zeitung, wobei der Code Informationen umfasst, die sich zumindest auf die Identität und die Publikationsnummer der Zeitung beziehen und Mittel (8) zum Senden der von dem Leser gelesenen Informationen zu einer Abrechnungsstelle, **dadurch gekennzeichnet, dass** die Vorrichtung eine Zeitungsentwertungs- oder Zerstörungsvorrichtung (1,6) aufweist, die angepasst ist die Zeitung zu entwerten oder zu zerstören in Verbindung mit dem Lesen des Codes auf der Zeitung durch die Lesevorrichtung (2).

7. Vorrichtung nach Anspruch 6, **dadurch gekennzeichnet, dass** die Lesevorrichtung (2), vorzugsweise on-line, mittels eines Modems (8) mit einem Officecomputer des Zeitungs- Distributors verbunden ist, von dem die entsprechenden Verlegerfirmen Informationen abrufen können, die sich auf die entwerteten oder gelöschten Zeitungen beziehen.

8. Vorrichtung gemäß Anspruch 6 oder 7, **dadurch gekennzeichnet, dass** die Entwertungsvorrichtung (1,6) Mittel (6) umfasst, zur Zerstörung des Codes auf der Zeitung nach dessen Lesen.

9. Vorrichtung gemäß einem der vorhergehenden Ansprüche 6 bis 8, **dadurch gekennzeichnet, dass** die Zeitungsentwertungsvorrichtung (1,6) angepasst ist, um mit der Entwertung einer Zeitung zu beginnen, bevor dessen Code von der Lesevorrichtung gelesen werden kann.

## Revendications

1. Procédé de gestion de journaux et de magazines de vente à la commission non vendus dans un établissement de vente au détail de journaux, comprenant la lecture, par un dispositif de lecture (2), d'un code lisible sur chaque journal ou magazine, dans lequel le code comprend des informations concernant au moins l'identité et le numéro de chaque dit journal, et l'envoi (8) des informations lues par le dispositif de lecture à un emplacement distant auquel les journaux sont comptabilisés, **caractérisé par** la dégradation ou la destruction, par un dispositif de dégradation de journal (1, 6) placé dans l'établissement de vente au détail, du journal conjointement avec la lecture du code du journal.

2. Procédé selon la revendication 1, **caractérisé en ce que** le dispositif de lecture est connecté en ligne à un ordinateur de bureau appartenant au distributeur, par l'intermédiaire d'un modem (8), dans lequel la maison d'édition qui a publié le journal est capable de récupérer des informations concernant la dégradation, ou l'annulation, du journal dans l'ordinateur de bureau.

3. Procédé selon la revendication 1 ou 2, **caractérisé en ce que** les journaux dégradés sont placés dans un dépôt de collecte de vieux papiers normalement utilisé par le détaillant.

4. Procédé selon l'une quelconque des revendications 1 à 3, **caractérisé en ce que** le dispositif de dégradation de journal (1, 6) est adapté pour détruire le code sur le journal à la suite de la lecture dudit code.

5. Procédé selon l'une quelconque des revendications 1 à 4, **caractérisé en ce que** le dispositif de dégradation de journal est adapté pour commencer la dégradation d'un journal avant que son code puisse être lu par le dispositif de lecture (2).

6. Dispositif pour gérer des journaux de vente à la commission non vendus dans un établissement de vente au détail, comprenant un dispositif de lecture (2) qui est adapté pour lire un code lisible sur chaque journal, dans lequel ledit code comprend des informations concernant au moins l'identité et le numéro de publication du journal, et des moyens (8) pour envoyer les informations lues par ledit dispositif de lecture à un centre de comptabilisation, **caractérisé en ce que** le dispositif comprend un dispositif de dégradation ou de destruction de journal (1, 6) qui est adapté pour dégrader ou détruire un journal conjointement avec la lecture du code sur ledit journal par ledit dispositif de lecture (2).

7. Dispositif selon la revendication 6, **caractérisé en ce que** le dispositif de lecture (2) est, de préférence, connecté en ligne, par l'intermédiaire d'un modem (8), à un ordinateur de bureau appartenant au distributeur de journaux, à partir duquel des maisons d'édition respectives sont capables de recueillir des informations concernant les journaux dégradés ou annulés.

8. Dispositif selon la revendication 6 ou 7, **caractérisé en ce que** le dispositif de dégradation (1, 6) comprend des moyens (6) pour détruire le code sur le journal à la suite de la lecture dudit code.

9. Dispositif selon l'une quelconque des revendications 6 à 8, **caractérisé en ce que** le dispositif de dégradation de journal (1, 6) est adapté pour commencer la dégradation d'un journal avant que son code puisse être lu par le dispositif de lecture
